(19) Europäisches Patentamt
European Patent Office
Office européen des brevets

(11) Publication number: 0 305 393 B1

(12) # EUROPEAN PATENT SPECIFICATION

(45) Date of publication of patent specification: 06.05.92

(51) Int. Cl.5: C23F 11/00, E04G 23/02, E04C 5/20

(21) Application number: 87903356.1

(22) Date of filing: 15.05.87

(86) International application number:
PCT/GB87/00339

(87) International publication number:
WO 87/06958 (19.11.87 87/25)

(54) **INHIBITING CORROSION IN REINFORCED CONCRETE.**

(30) Priority: 16.05.86 GB 8611942

(43) Date of publication of application:
08.03.89 Bulletin 89/10

(45) Publication of the grant of the patent:
06.05.92 Bulletin 92/19

(84) Designated Contracting States:
AT BE CH DE FR GB IT LI LU NL SE

(56) References cited:
FR-A- 1 420 343
GB-A- 919 778
GB-A- 1 074 311
US-A- 2 914 424
US-A- 4 275 835

CHEMICAL ABSTRACTS, vol. 89, no. 24, 11 December 1978, Columbus, OH (US); p. 335, no. 203022u

(73) Proprietor: OUEENSWAY EXPERT DEVELOPMENTS LIMITED
13e Oueensway Stem Lane Industrial Estate
New Milton Hampshire BH25 5NN(GB)

(72) Inventor: BANKS, Leslie
"The Copse" Bure Homage Lane Friar's Cliff
Christchurch Dorset BH23 4SO(GB)
Inventor: HOSGOOD, Henry, David
39 Glenville Road Walkford Christchurch
Dorset BH23 5PX(GB)

(74) Representative: Bankes, Stephen Charles Digby et al
BARON & WARREN 18 South End Kensington
London W8 5BU(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 305 393 B1

## Description

This invention relates to a method for inhibiting corrosion of metal reinforcement in structures of masonry or cementitious material, especially (but not only) concrete.

Such materials usually have compressive strength, but little tensile strength. It is therefore necessary when using concrete, for example, as a structural member to incorporate metal (usually steel) reinforcing members to impart the required tensile strength. The reinforcing members may be placed under tension to form "pre-stressed" or "post-tensioned" concrete structures.

If the reinforcement corrodes, it may expand and cause internal stresses within the concrete. This ultimately leads to cracking of the concrete which is then liable to start breaking up. The cracking also results in the metal being further exposed to water and atmospheric oxygen, accelerating the rusting process.

Rusting is a complex electrolytic process whereby ferrous metal is oxidised to ferric oxide, generally by atmospheric oxygen in the presence of water. In fresh concrete, however, the rusting process is inhibited by the strongly alkaline conditions. Generally the prevailing pH is about 12.0 - 14.0. Rusting is accelerated by the presence of metallic salts and/or carbon dioxide. In many reinforced concrete structures which have been erected in the past, calcium chloride was used to accelerate the hardening of the concrete. Although this practice has now fallen into disfavour and has indeed been banned in many countries including the United Kingdom, the presence of calcium chloride has caused widespread accelerated corrosion.

Accelerated corrosion of steel reinforcement within concrete can also occur as a result of penetration of chlorides from other sources such as airborne sodium chloride present in marine environments and the use of de-icing salts such as sodium or potassium chloride on highway structures such as bridges.

A further cause of corrosion is the carbonation of the concrete. The alkaline pH is a result of the presence in the hydrated cement of large quantities of hydrated lime $Ca(OH)_2$. Carbon dioxide from the atmosphere reacts with hydrated lime to form calcium carbonate, $CaCO_3$, reducing the pH to approximately 9.0. At this reduced pH, rusting is no longer inhibited.

Carbonation takes place at a rate which depends upon a variety of factors such as the original cement content of the concrete, the water:cement ratio of the concrete, aggregate type and grading, density and compaction, and the aspect and degree of protection afforded to the concrete surface. The net result of the carbonation process is however that ultimately the alkalinity which protects the metal from rusting is reduced and the rusting process will start. The reduction in alkalinity is further compounded by acid pollutants in the air such as oxides of sulphur and nitrogen.

In good quality concrete with correct placement of the reinforcement, problems of corrosion resulting from carbonation may not occur for fifty years or even longer. This period can be extended by the use of anti-carbonation coatings on the outer surface of the concrete which help to exclude carbon dioxide and other acidic atmospheric pollutants. There are however many structures where metal corrosion is inevitable and cannot easily be checked. Surface coatings which restrict the entry of carbon dioxide are not as effective if the carbonation depth prior to the application of the coating has already reached or passed the first metal reinforcements or if chloride ion is present in the concrete.

Various attempts have been made to protect steel reinforcement against corrosion when erecting new structures. In DE-A-2743596 there is disclosed and claimed the incorporation of various anti-corrosive agents in the concrete mix, for example copper sulphate, sodium molybdate, dinitrophenol, N-ethymaleimide and iodoacetamide. Japanese published patent application 53-94333 discloses the addition to the concrete of a porous material such as alumina or pumice containing an anti-corrosive agent such as sodium nitrite or sodium benzoate in its pores. The anti-corrosive agent is released slowly, with the object of providing long term corrosion protection and resistance to waste gases such as sulphur dioxide.

US-A-4,442,021 discloses a process wherein the metal reinforcing elements are themselves coated with an anti-corrosive mixture comprising an aqueous suspension of hydraulic binding agents and corrosion inhibitors. The preferred corrosion inhibitor is a mixture of an alkaline metal nitrite or alkaline earth metal nitrite and one or more amines such as triazole, cyclohexylamine or an aliphatic amine having four to seventeen methyl groups. GB-A-919,778 discloses the use of capric acid as a vapour phase inhibitor for metal articles during handling or storage, the articles being wrapped and kept at a temperature of -1 to 43 ° C.

None of these prior art methods can however be used to protect existing structures.

It is known to apply to existing concrete structures surface coatings which prevent or retard penetration of carbon dioxide and acid pollutants.

According to FR-A-1,420,343, a corrosion retardant such as zinc sulphate or sodium phosphate is incorporated into the water with which mortar is made, or is injected as a solution into a concrete structure.

GB-A-1,074,311 discloses a method of stressing concrete wherein stressing wires or cables are drawn through ducts in the concrete which are filled with a vapour phase inhibitor.

US-A-4,275,835 discloses a corrosion inhibiting device wherein a vapour phase inhibitor is absorbed in a foamed body.

According to one aspect of the present invention there is provided a method of inhibiting corrosion of reinforcement of a reinforced porous concrete structure by incorporation in the concrete of a vapour-phase corrosion inhibitor, characterised in that the inhibitor is inserted in the structure, during or after its formation, and selectively positioned adjacent or in contact with the reinforcement, to cause the inhibitor to migrate through the structure and more particularly along an interface between the structural material and the reinforcement.

It will be understood that such "inserting" of the vapour phase corrosion inhibitor (VPI) means that either the said structure pre-exists as a body into which the VPI in any suitable form can be "inserted", e.g. into bored holes; or the VPI is provided as, or as a component of, a pre-existing self-supporting body which is independent of the reinforcement and can be "inserted" in the sense of being selectively positioned in the structure during, as well as after, formation of the structure. Such "inserting" of the pre-existing body carrying the VPI during formation of the structure is distinguished from the mere addition of VPI material for random dispersion as an ingredient of a concrete or other cementitious mix. It is also distinguished from pre-coating of the metal reinforcement with dispersions of inhibitors and coating binders, such supported coatings, which are in fixed relationship to the reinforcement, being inconvenient to apply on a construction site, and VPI's having questionable storage life and durability when applied prior to delivery of the reinforcement to the site.

Although the invention is thus seen to be applicable to structures of masonry material, e.g. natural or artificial stone, non-cementitious "mortars" or "concretes" which set by reaction with atmospheric carbon dioxide, or brickwork, or of cementitious material, e.g. concrete, "microconcrete" (having no large aggregate), mortars or renders, the following description will refer, for simplicity, simply to concrete.

It is possible in this way to inhibit the corrosion of metal reinforcement, especially steel or other ferrous metal reinforcement, even where full carbonation of the concrete has occurred or where calcium chloride is incorporated in the concrete, or where chloride contamination from other sources is present, as hereinbefore described.

Vapour phase corrosion inhibitors (VPI's) are volatile solids which vapourize and migrate through porous structures. It has been found that such compounds will pass through the pores and interstices of concrete and particularly through any water lens which could be present adjacent to metal reinforcement. Without limiting the invention to any particular chemical principle, it appears that when VPI's contact a metal surface they form a thin mono-molecular adsorption layer which, in the presence of moisture, develops strong ionic activity and creates a protective barrier between the metal and the corrosive environment. The reinforcing metal is thus protected from corrosion.

The VPI's can be inserted into the concrete structure adjacent to the reinforcing steel by drilling into the concrete, inserting the VPI and resealing the hole with a suitable (e.g. cementitious) repair material which is substantially less permeable than the concrete structure to the vapour of the inhibitor. Insertion of the VPI into existing cracks or faults in a concrete structure preferably followed by sealing with suitable, e.g. flexible, repair material would also be possible.

The VPI's may be provided in solid insert form or in extrudable form using suitable solid or extrudable carrier materials, or may be in readily flowable form (e.g. liquid, solution or gel) in cases where the orientation of the insertion holes is suitable, e.g. vertical holes in a horizontal concrete structure. Alternatively, a substantially self-supporting body carrying the VPI may conveniently be placed in close proximity (or contact) with the reinforcement before it is covered with concrete.

Thus the invention includes methods wherein the inhibitor is carried by a (preferably shaped) body of carrier material. Preferably, the inhibitor is at least partly within the shaped body and the shaped body is permeable to the vapour of the inhibitor. The carrier may be selected to suit the manner of use, for example from open-celled foam, organic polymeric material permeable to the said vapour, or inorganic material e.g. an extruded or cast slug or rod or pellet of masonry or cementitious material, or the shaped carrier body may comprise fibrous or filamentary material, e.g. a non-woven fabric, paper or felt, preferably carrying as much of the VPI as it will hold, e.g. 50 to 90% by weight of the carrier.

The carrier carrying (preferably impregnated with) the required amount of VPI may be cast or otherwise formed into discrete units of suitable size and shape, or it may be extruded or otherwise formed into a rod of suitable dimensions which may be subsequently cut into appropriate lengths depending upon the dosage required for a particular insertion.

Examples of suitable carrier materials include

i. Open celled foamed polymers manufactured from polymeric materials unaffected chemically by the VPI.

ii. Cold cured polymeric materials with a molecular structure such that a VPI included prior to cure will diffuse out. Such materials could be designed to control the rate of diffusion of the VPI into concrete.

iii. Pellets, rods, etc., made from porous inorganic materials such as: Sand/cement mortars, extended gypsum plasters, unfired, partially fired or fully fired clays, pumice, chalk, or zeolites.

iv. Felt, paper, card, cloth, balsa wood, or cork.

An ingenious form of the invention provides that the body comprising the inhibitor is a reinforcement spacer. Spacers are of course well known for positioning reinforcing rods relative to one another and/or relative to the external surfaces of the structure to maintain the prescribed cover during construction. For the purposes of this invention they will preferably consist of material which is porous or is permeable to the VPI vapour, for example masonry or cementitious material or fibrous inorganic material, possibly with plastics attachments or inserts.

Various inhibitors may be used in the method of the invention, provided they are chemically suited to inhibiting corrosion of whatever reinforcement is used, and will vapourise at ambient temperatures to produce a vapour which can migrate through a concrete matrix to the reinforcement in sufficient concentration to prevent or retard corrosion. The inhibitor for ferrous metal reinforcement may for example be, or include, at least one material selected from

i Amine salts with nitrous or chromic acids,

ii Amine salts with carbonic acid, carbamic acid, acetic acid, substituted benzoic acids and unsubstituted benzoic acids,

iii Organic esters of nitrous acid, phthalic acid or carbonic acid,

iv Primary, secondary and tertiary aliphatic amines,

v Cycloaliphatic and aromatic amines,

vi Polymethylene amines,

vii Mixtures of nitrites with urea, hexamethylene tetramine and ethanolamines, or

viii Nitrobenzene and 1-Nitronaphthalene.

The preferred VPI's for protecting ferrous metal (usually steel) reinforcement by the method of the present invention are dicyclohexylamine nitrite (DCHN), cyclohexylamine benzoate (CHAB) and cyclohexylamine carbamate (CHC), more preferably a mixture of CHAB and CHC. These are both white solids and have the following structures:

CHAB

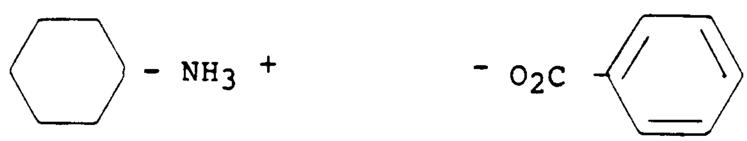

CHC

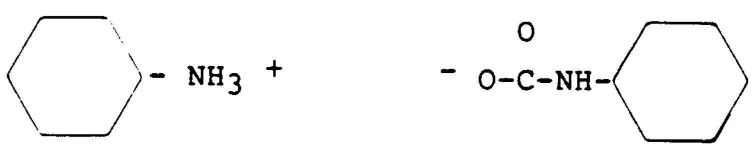

Mixtures of fast-acting and slow-acting VPI's have the advantage of combining fast initial action with extended service life. Thus the inhibitor preferably comprises at least two vapour phase inhibitor compounds, at least one of which vaporises relatively slowly and at least one other of which vaporises relatively quickly under the conditions to be encountered by the concrete structure in service.

Preferred embodiments of the invention will now be described by way of example with reference to the accompanying drawings wherein:

Figure 1 is a schematic sectional view (section lines omitted for clarity) through a reinforced concrete structural member treated in accordance with the present invention;

Figure 2 is an enlarged view of part of Figure 1, showing the site of treatment in more detail; and

Figure 3 is a graphical demonstration of the effectiveness of this invention.

Referring first to Figure 1, a concrete structural member 10 is reinforced with vertical (as shown) steel reinforcing rods 12 and horizontal (as shown) rods 13. At sites 19, spaced at intervals across the surface of the concrete, holes are drilled for the insertion of a vapour phase corrosion inhibitor. One of these sites is shown in more detail in Figure 2.

As can be seen in Figure 2, a hole is drilled from the surface of the concrete to a position just beyond the first reinforcing rod 12. A solid insert 14 (preferably a rod) incorporating the VPI is pushed to the end of the hole and cotton wadding 16 (optional) is inserted to hold the insert in place. The hole is then repaired with a suitable cementitious repair material 18 having a lower permeability than the reinforced concrete so that the inhibitor does not diffuse straight out along the drilled hole.

This process is repeated wherever required on the concrete structure. The inhibitor slowly vaporises and migrates through the porous concrete and more particularly along the surfaces of reinforcing rods 12 and 13.

The spacing of the drilling sites 19 is dependent upon the amount of steel present within the member, the volatility of the chosen VPI, an assessment of the porosity of the concrete, the anticipated range of ambient temperatures and the VPI content of the inserts.

The inserts may be renewed periodically, the number of years between renewals being checked by carrying out spot tests to establish the continuing presence of the VPI within the concrete. A a sealing coat can be applied to assist vapour retention. Such a coating must of course not restrict normal "breathing" of the concrete. It has been found that loss of the VPI can be minimised by using coatings of the type used hitherto to protect the concrete surface against carbon dioxide and acid pollutants. The relatively large size of the VPI molecules tends to prevent them from penetrating the coating while sufficient oxygen and nitrogen from the air can pass to enable the concrete to breathe.

It will be appreciated that the present invention may be used both to provide initial protection during construction and to augment the existing protection where corrosion inhibitors have already been incorporated in a concrete body when it was cast. The inhibitors for such existing protection could have been provided in the spacers or other selectively positioned bodies according to this invention, or could have been dispersed in the concrete mix prior to casting. The invention may also be useful where existing cathodic protection is ineffective, e.g. due to electrical discontinuity in the metal reinforcement.

Included as another aspect of the invention is a vapour-phase corrosion inhibitor for protecting reinforcement in concrete, which inhibitor exists independently of the concrete and of the reinforcement as, or as a component of, a substantially solid body (i.e. not merely a powdered or granular additive), preferably a self-supporting and/or shaped body, and may include any of the features of such a body hereinbefore specified.

Examples of the invention will now be described with reference to Figure 3, which shows the timed change of electrical potential measured through steel reinforcement in specimen blocks of concrete with various levels of corrosion protection. The test method involved electrochemical measurements on abraded steel specimens embedded in concrete cylinders using a current density of 10 microAmps per square centimetre in a test circuit basically as described by V.J.Treadaway and A.D.Russell in "Highways and Public Work", September 1968, the disclosure of which is incorporated herein by reference.

The abraded steel rods of 10 millimetres diameter were embedded in a concrete mix comprising 1:2:4 cement:coarse aggregate (up to 12 millimetres):fine aggregate in moulds to form substantially circular concrete cylinders of 6.5 centimetres diameter and 12 centimetres height. 2% by weight (of cement) calcium chloride was added to produce conveniently fast corrosion. As can be seen from the graphs in Figure 3, Comparison Example NT47, containing no calcium chloride or VPI, showed no falling-off in measured potential over 20 to 25 minutes, whereas Comparison Example NT5, containing 2% calcium chloride but no VPI showed a sharp decrease after 6 or 7 minutes, and Comparison Examples NT45 and NT53, each containing 2% calcium chloride but no VPI, showed distinct decreases after 18 to 20 minutes and 15 to 16 minutes respectively. These decreases indicate the onset of severe corrosion which changes the electrical resistance of the concrete reinforcement. The Examples of the invention, identified as NT45 and NT48 containing 0.01% of CHAV VPI based on the weight of the concrete cylinder and 2% calcium chloride maintained a high electrical potential indicating little corrosion after 20 to 25 minutes. Example NT55, which was saturated with water throughout with 2% calcium chloride and 0.01% of CHAV VPI also showed no decrease in potential, indicating little corrosion, after 20 to 25 minutes. Similar results were obtained with addition of 3% (of cement) calcium chloride. Similar tests on fully cured (28 days) concrete specimens, with controlled water content to ensure adequate conductivity, showed the onset of corrosion after 1½ to 2 hours in unprotected samples, and again little or no corrosion in the samples according to this invention.

## Claims

1. A method of inhibiting corrosion of reinforcement (12, 13) of a reinforced porous concrete structure (10) by incorporation in the concrete of a vapour-phase corrosion inhibitor, characterised in that the inhibitor is inserted in the structure, during or after its formation, and selectively positioned adjacent or in contact with the reinforcement, to cause the inhibitor to migrate through the structure and more particularly along an interface between the structural material and the reinforcement.

2. A method according to claim 1 wherein the inhibitor is inserted in holes in the porous structural material of a pre-existing structure and thereafter the holes are plugged with a material (18) which is substantially less permeable than said structural material to the vapour of the inhibitor.

3. A method according to claim 1 wherein the inhibitor is or is a component of, a flowable material.

4. A method according to claim 1 wherein a pre-existing self-supporting substantially solid body comprising the inhibitor is placed in close proximity to the reinforcement and the structure is formed around it.

5. A method according to claim 4 wherein said self-supporting body is a reinforcement spacer.

6. A method according to any of the preceding claims, wherein the inhibitor is carried by a body of carrier material.

7. A method according to claim 6, wherein the inhibitor is at least partly within the carrier body and the carrier body is permeable to the vapour of the inhibitor.

8. A method according to claim 7 wherein the carrier body comprises open-celled foam, organic polymeric material permeable to the said vapour, or inorganic material.

9. A method according to claim 7, wherein the carrier body comprises fibrous or filamentary material.

10. A method according to claim 9, wherein the carrier body comprises a non-woven fabric, preferably a felt.

11. A method according to any of the preceding claims, wherein the inhibitor comprises at least two vapour phase inhibitor compounds, at least one of which vaporises relatively slowly and at least one other of which vaporises relatively quickly under the conditions to be encountered by the said structure in service.

12. A method according to any of the preceding claims, wherein the inhibitor is or includes at least one material selected from
    i. Amine salts with nitrous or chromic acids,
    ii. Amine salts with carbonic acid, carbamic acid, acetic acid, substituted benzoic acids and unsubstituted benzoic acids.
    iii. Organic esters of nitrous acid, phthalic acid or carbonic acid,
    iv. Primary, secondary and tertiary aliphatic amines,
    v. Cycloaliphatic and aromatic amines,
    vi. Polymethylene amines,
    vii. Mixtures of nitrites with urea, hexamethylene tetramine and ethanolamines, or
    viii. Nitrobenzene and 1-Nitronaphthalene.

13. A method according to claim 12 wherein the inhibitor is or includes dicyclohexylamine nitrite (DCHN), cyclohexylamine benzoate (CHAB), or cyclohexylamine carbamate (CHC).

14. A method according to claim 13 wherein the inhibitor is or includes a mixture of CHAB and CHC.

## Revendications

**1.** Méthode d'inhibition de la corrosion de l'armature (12, 13) d'une structure en béton armé poreux (10) par incorporation dans le béton d'un inhibiteur de corrosion en phase vapeur, caractérisé par le fait que l'inhibiteur est inséré dans la structure, pendant ou après sa formation, et positionné sélectivement à proximité de l'armature ou en contact avec elle, pour faire migrer l'inhibiteur à travers la structure, et plus particulièrement le long d'une interface entre le matériau structurel et l'armature.

**2.** Méthode selon la revendication 1, dans laquelle l'inhibiteur est inséré dans des trous pratiqués dans le matériau structurel d'une structure pré-existante et où, par la suite, les trous sont obturés par un matériau (18) qui est sensiblement moins perméable que ledit matériau structurel à la vapeur de l'inhibiteur.

**3.** Méthode selon la revendication 1, dans laquelle l'inhibiteur est un matériau capable de couler.

**4.** Méthode selon la revendication 1, dans laquelle un corps principalement solide auto-portant pré-existant comprenant l'inhibiteur est placé à proximité immédiate de l'armature et où la structure est formée autour de lui.

**5.** Méthode selon la revendication 4, dans laquelle ledit corps auto-portant est une entretoise de renfort.

**6.** Méthode selon l'une quelconque des revendications précédentes, dans laquelle l'inhibiteur est porté par un corps de matériau porteur.

**7.** Méthode selon la revendication 6, dans laquelle l'inhibiteur est au moins partiellement à l'intérieur du corps porteur et où le corps porteur est perméable à la vapeur de l'inhibiteur.

**8.** Méthode selon la revendication 7, dans laquelle le corps porteur comprend de la mousse à cellules ouvertes, un matériau polymérique organique perméable à ladite vapeur, ou du matériau inorganique.

**9.** Méthode selon la revendication 7, dans laquelle le corps porteur comprend du matériau fibreux ou filamenteux.

**10.** Méthode selon la revendication 9, dans laquelle le corps porteur comprend une étoffe non tissée, de préférence un feutre.

**11.** Méthode selon l'une quelconque des revendications précédentes, dans laquelle l'inhibiteur comprend au moins deux composés inhibiteurs en phase vapeur, dont au moins un s'évapore relativement lentement et dont au moins un autre s'évapore relativement vite dans les conditions devant être rencontrées en service par ladite structure.

**12.** Méthode selon l'une quelconque des revendications précédentes, dans laquelle l'inhibiteur est ou comprend au moins un matériau sélectionné parmi les suivants:
i. Sels aminés avec acides nitreux ou chromique,
ii. Sels aminés avec acide carbonique, acide carbamique, acide acétique, acides benzoïques substitués et acides benzoïques non substitués.
iii. Esters organiques d'acide nitreux, d'acide phtalique ou d'acide carbonique,
iv. Amines aliphatiques primaires, secondaires et tertiaires,
v. Amines cycloaliphatiques et aromatiques,
vi. Amines de polyméthylène,
vii. Mélanges de nitrites avec de l'urée, du tétramine d'hexaméthylène et des éthanolamines, ou
viii. Nitrobenzène et 1-Nitronaphtalène.

**13.** Méthode selon la revendication 12, dans laquelle l'inhibiteur est ou comprend du nitrite de dicyclohexylamine (NDCH), du benzoate de cyclohexylamine (BCHA), ou du carbonate de cyclohexylamine (CCH).

**14.** Méthode selon la revendication 13, dans laquelle l'inhibiteur est ou comprend un mélange de BCHA ou de CCH.

## Patentansprüche

1. Ein Verfahren zum Hemmen der Korrosion von Bewehrungselementen (12, 13) einer porösen Stahlbetonstruktur (10) durch Einbeziehen eines Dampfphase -Korrosionshemmstoffes in den Beton, dadurch gekennzeichnet, daß der Hemmstoff während oder nach deren Bildung in die Struktur eingeführt und selektiv anschließend oder in Berührung mit der Bewehrung angeordnet wird, um zu bewirken, daß der Hemmstoff durch die Struktur hindurch und insbesondere entlang einer Grenzfläche zwischen dem Strukturmaterial und der Bewehrung wandert.

2. Ein Verfahren nach Anspruch 1, bei dem der Hemmstoff in Löcher in dem porösen Strukturmaterial einer bereits bestehenden Struktur eingeführt wird, worauf die Löcher mit einem Material (18) verstopft werden, das dem Hemmstoffdampf gegenüber wesentlich weniger durchlässig ist als das besagte Strukturmaterial.

3. Ein Verfahren nach Anspruch 1, bei dem der Hemmstoff ein fließfähiges Material oder ein Bestandteil eines solchen ist.

4. Ein Verfahren nach Anspruch 1, bei dem ein bereits bestehender selbsttragender im wesentlichen fester den Hemmstoff umfassender Körper in unmittelbarer Nähe der Bewehrung angeordnet und die Struktur darum herum gebildet wird.

5. Ein Verfahren nach Anspruch 4, bei dem der besagte selbsttragende Körper ein Bewehrungsabstandsstück ist.

6. Ein Verfahren nach einem der vorstehenden Ansprüche, bei dem der Hemmstoff durch einen Körper aus Trägermaterial getragen wird.

7. Ein Verfahren nach Anspruch 6, bei dem der Hemmstoff mindestens teilweise innerhalb des Trägermaterialkörpers enthalten und der Trägermaterialkörper dem Hemmstoffdampf gegenüber durchlässig ist.

8. Ein Verfahren nach Anspruch 7, bei dem der Trägermaterialkörper offenzelligen Schaumstoff, dem besagten Dampf gegenüber durchlässiges polymeres Material oder anorganisches Material umfaßt.

9. Ein Verfahren nach Anspruch 7, bei dem der Trägerkörper faseriges oder fadenförmiges Material umfaßt.

10. Ein Verfahren nach Anspruch 9, bei dem der Trägermaterialkörper ein Vliesgewebe, vorzugsweise einen Filz, umfaßt.

11. Ein Verfahren nach einem der vorstehenden Ansprüche, bei dem der Hemmstoff mindestens zwei Dampfphasen-Hemmstoffverbindungen umfaßt, von denen unter den Bedingungen, denen die besagte Struktur im Einsatz ausgesetzt sein wird, mindestens eine relativ langsam und mindestens eine andere relativ schnell verdampft.

12. Ein Verfahren nach einem der vorstehenden Ansprüche, bei dem der Hemmstoff ein Stoff ist oder mindestens einen Stoff enthält, der der folgenden Gruppe angehört :
    i. Aminsalze mit Salpetrig- oder Chromsäure,
    ii. Aminsalze mit Kohlensäure, Karbaminsäure, Essigsäure, substituierten Benzoesäuren und nichtsubstituierten Benzoesäuren.
    iii. Organische Ester von Salpetrigsäure, Phthalsäure oder Kohlensäure,
    iv. Primäre, sekundäre und tertiäre aliphatische Amine,
    v. Cycloaliphatische und aromatische Amine,
    vi. Polymethylenamine,
    vii. Gemische von Nitriten mit Harnstoff, Hexamethylentetramin und Äthanolaminen, oder
    viii. Nitrobenzol und 1-Nitronaphthalin.

13. Ein Verfahren nach Anspruch 12, bei dem der Hemmstoff Dicyclohexylaminnitrit (DCHN), Cyclohexylaminbenzoat (CHAB) oder Cyclohexylaminkarbamat (CHC) ist oder enthält.

14. Ein Verfahren nach Anspruch 13, bei dem der Hemmstoff ein Gemisch von CHAB und CHC ist oder enthält.

Fig.1.

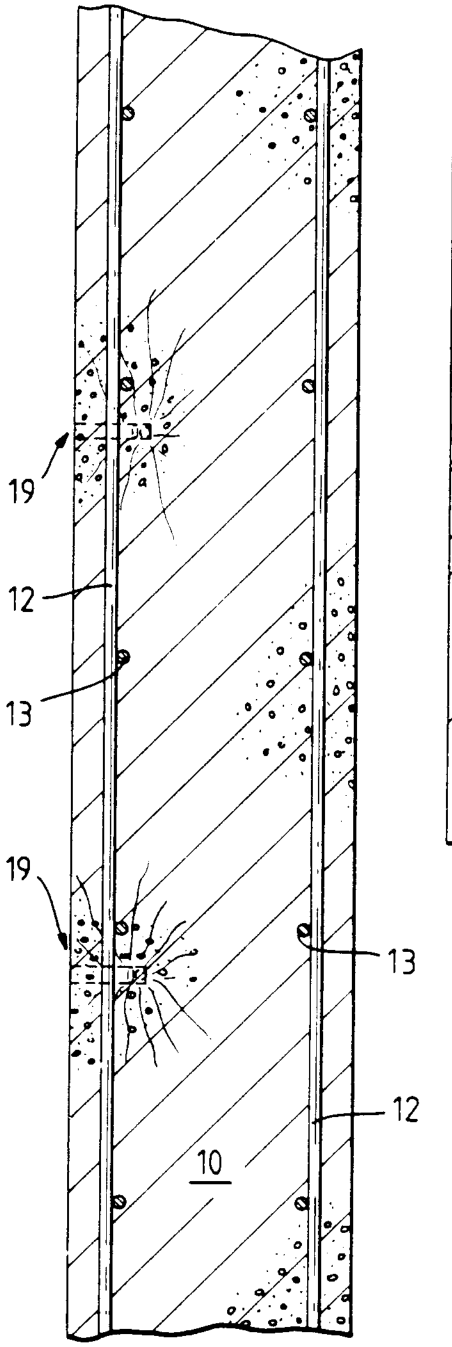


Fig.2.

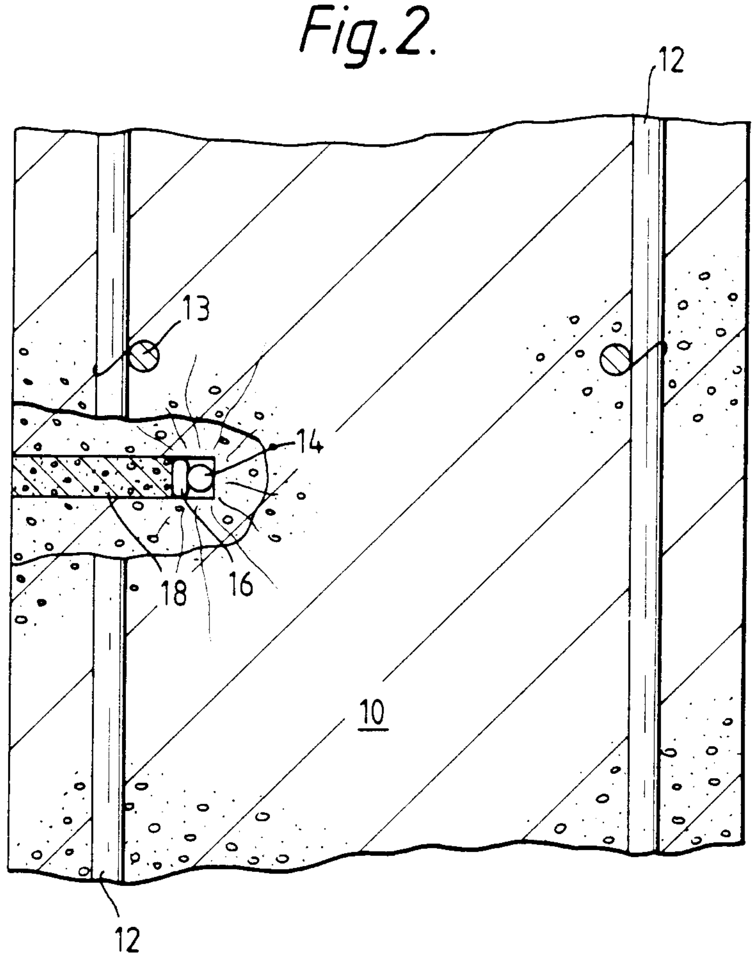

Fig. 3.

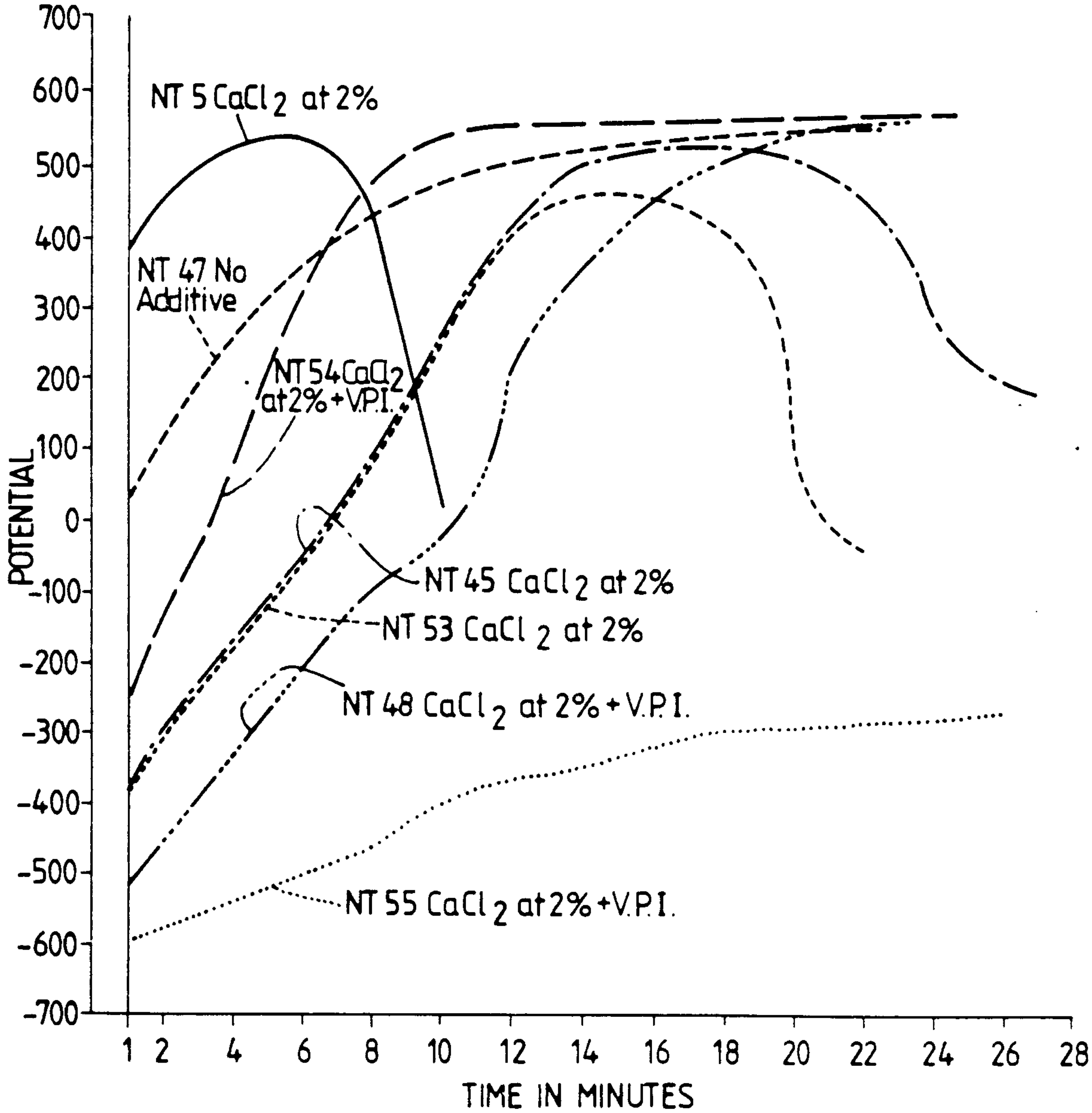
700
600
500
400
300
200
100
0
-100
-200
-300
-400
-500
-600
-700
POTENTIAL
NT 5 CaCl 2 at 2%
NT 47 No Additive
NT 54 CaCl2 at 2% + V.P.I.
NT 45 CaCl 2 at 2%
NT 53 CaCl 2 at 2%
NT 48 CaCl 2 at 2% + V.P.I.
NT 55 CaCl 2 at 2% + V.P.I.
1 2 4 6 8 10 12 14 16 18 20 22 24 26 28
TIME IN MINUTES